# EUROPÄISCHE PATENTSCHRIFT

(11) **EP 3 781 812 B1**
(45) Veröffentlichungstag und Bekanntmachung des Hinweises auf die Patenterteilung: **25.12.2024**
(21) Anmeldenummer: 19706552.7
(22) Anmeldetag: 19.02.2019
(51) Int. Cl.: F03D 80/30, F03D 17/00

(54) **ÜBERPRÜFUNG VON BLITZABLEITERN FÜR WINDENERGIEANLAGEN**
CHECKING LIGHTNING CONDUCTORS FOR WIND TURBINES
CONTRÔLE DE PARAFOUDRES D'ÉOLIENNES

(30) Priorität: 17.04.2018 DE 102018109049
(43) Veröffentlichungstag der Anmeldung: 24.02.2021
(73) Patentinhaber: RWE Offshore Wind GmbH, 45141 Essen (DE)
(72) Erfinder: SCHLÜTER, Thorsten, 25355 Barmstedt (DE); WEYRICH, Kim, 56841 Traben-Trarbach (DE); STRAUSS, Heiner, 13059 Berlin (DE)
(74) Vertreter: Cohausz & Florack
(86) Internationale Anmeldenummer: PCT/EP2019/054020
(87) Internationale Veröffentlichungsnummer: WO 2019/201493

(56) Entgegenhaltungen:
- DE-A1- 102012 214 981
- JP-A- 2013 029 351
- JP-A- 2017 142 071
- JP-A- 2017 150 324
- US-A1- 2018 048 136

## Beschreibung

### Gebiet der Erfindung

Beispielhafte Ausführungsformen der Erfindung betreffen die Überprüfung von Blitzableitern, die von Windenergieanlagen umfasst sind, beispielsweise ob diese beschädigt sind oder nicht.

### Hintergrund der Erfindung

Windenergieanlagen sind in den Rotorblättern mit einem Blitzschutzsystem ausgestattet. Dieses System muss in regelmäßigen Abständen auf Grund gesetzgebender Anforderung. Diese Überprüfung besteht gemäß Stand der Technik aus der Messung des Widerstandes des von einem Blitzschutzsystem umfassten Blitzableiters mit einem Messgerät, für dessen Anwendung das Messgerät zwischen Anfang und dem Ende des Blitzableiters misst.

Die Messung muss ferner zwischen verschiedenen Einkoppelstellen und dem Anfang durchgeführt werden, zu dessen Zugang sich das Personal an dem jeweiligen, den Blitzableiter umfassenden Rotorblatt abseilen muss. Dies ist aufwendig, gefährlich und zudem mit hohen Kosten verbunden.

Der Nachteil dieser Methode ist der personelle sowie zeitliche Aufwand, da das Anbringen des Messgerätes mit einer Seilschaft an jedem Blatt ausgeführt werden muss. Der Rotor der Windenergieanlage muss dafür jeweils für jede Messung nachgedreht werden. Zusätzlich ist die derzeitige Messmethode mit einem erheblichen Absturzrisiko verbunden.

Zudem müssen derartige Widerstandsmessung alle zwei Jahre durchgeführt werden. Ist ein Blitzableiter beschädigt oder defekt, kann dies dazu führen, dass die über einen Blitz eingeleitete Energie nicht über den Blitzableiter abgeleitet werden kann. Anstelle dessen wird die Energie zu naheliegenden Komponenten geführt, die dabei stark beschädigt oder sogar vollständig zerstört werden können. Ein Beispiel aus dem Stand der Technik ist aus DE102012214981A1 bekannt.

### Zusammenfassung einiger beispielhafter Ausführungsformen der Erfindung

Ausgehend von diesem Stand der Technik ist es die Aufgabe des vorliegenden Gegenstands, eine Lösung zur Überprüfung von Blitzableitern, die von Windenergieanlagen umfasst sind, bereitzustellen, die es ermöglicht, zum einen mit geringem Zeitaufwand und zum anderen unter Minimierung der Risiken, insbesondere für das eine Überprüfung des Blitzableiters durchführende Personal, die entsprechende Überprüfung durchzuführen.

Diese Aufgabe wird gelöst mit einem Verfahren gemäß den Merkmalen der unabhängigen Ansprüche.

Gemäß einem ersten Aspekt der Erfindung wird ein Verfahren beschrieben, z. B. durchgeführt von einer oder mehreren Vorrichtungen, das Verfahren umfassend:
- Ermitteln einer Impulsantwortinformation indikativ für eine Impulsantwort, wobei die Impulsantwortinformation basierend auf einem in den Blitzableiter eingeleiteten Impuls, der durch eine elektromagnetische Welle charakterisiert ist, bestimmt wird, wobei die Impulsantwortinformation zumindest eine Wellenform und eine Laufzeit, die nach dem Einleiten des Impulses auf Basis von dessen Reflexion ermittelt wird, repräsentiert;
- Bestimmen einer Auswertungsinformation basierend auf der ermittelten Impulsantwortinformation, wobei die Impulsantwortinformation zumindest hinsichtlich der repräsentierten Wellenform und der Laufzeit der eingeleiteten und reflektierten elektromagnetischen Welle analysiert wird, wobei die Auswertungsinformation indikativ dafür ist, ob der Blitzableiter funktionsfähig ist oder nicht; und
- Ausgeben oder Veranlassen der Ausgabe der bestimmten Auswertungsinformation.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Einzelne Verfahrensschritte des Verfahrens gemäß dem ersten Aspekt (beispielsweise das Ermitteln der Impulsantwortinformation) können hierbei mit einer Sensorvorrichtung (z. B. Messeinrichtung), welche auch mindestens ein Sensorelement aufweist, durchgeführt werden. Ebenso können einzelne Verfahrensschritte (beispielsweise das Bestimmen der Auswertungsinformation), welche beispielswiese nicht unbedingt mit der Sensorvorrichtung durchgeführt werden müssen, von einer weiteren Vorrichtung vorgenommen werden, welche insbesondere über ein Kommunikationssystem mit der Vorrichtung, welche mindestens ein Sensorelement aufweist, in Verbindung steht.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Aspekt der Erfindung wird auch ein System beschrieben, umfassend mehrere Vorrichtungen, insbesondere einen Server und eine Vorrichtung zur Überprüfung eines Blitzableiters, welche zusammen ein Verfahren gemäß dem ersten Aspekt durchführen.

Ein beispielhaftes System gemäß dem dritten Aspekt umfasst eine beispielhafte Vorrichtung, beispielsweise ein mobiles Gerät oder einen Server zur Durchführung eines beispielhaften Verfahrens gemäß dem ersten Aspekt. Ferner kann das System beispielsweise eine Vorrichtung zur Überprüfung eines Blitzableiters, die Vorrichtung umfassend z. B. einen Impulsgenerator und eine Messeinrichtung umfassen.

Erfindungsgemäß umfasst ein Rotorblatt für eine Windenergieanlage bzw. das von einer Windenergieanlage umfasst ist, zumindest einen Blitzableiter (der z. B. intern oder extern des Rotorblatts angeordnet ist) und Mittel zur Überprüfung des zumindest einen Blitzableiters, wobei die Mittel zur Ausführung und/oder Durchführung eines erfindungsgemäßen Verfahrens nach dem ersten Aspekt der vorliegenden Erfindung ausgebildet und/oder eingerichtet sind.

Weitere Einzelheiten und Details des vorliegenden Gegenstands werden im Folgenden anhand der beispielhaft beschriebenen Ausführungsbeispiele aufgezeigt:
Ein Blitzableiter im Sinne der Erfindung ist eine Einrichtung, die die Aufgabe hat, Schäden bei einem Blitzeinschlag, z. B. an einer den Blitzableiter umfassende Einrichtung, zu vermeiden, und zudem den von dem Blitz eingeleiteten Strom über einen definierten Stromweg abzuleiten. Blitzableiter in Windenergieanlagen sind insbesondere von zumindest einem Rotorblatt der Windenergieanlage umfasst. Beispiele für derartige Blitzableiter sind Metallprofile, Metallseile, und/oder Metallleitungen, die im Inneren des zumindest einen Rotorblatts angeordnet sind (auch mit interne Blitzableiter bezeichnet).

Ferner können derartige Blitzableiter auch zumindest ein Geflecht aus Kupferdrähten (sogenannte Meshes) sein, die z. B. in den Blattflächen und/oder an den Blattkanten des Rotorblattes angeordnet bzw. von diesem umfasst sind. Auch Metallprofile in den Blattkanten des Rotorblattes können einen derartigen Blitzableiter darstellen. Ist der Blitzableiter nicht innerhalb des Blattes und/oder der Blattkante angeordnet, werden derartige Blitzableiter auch als externe Blitzableiter eines Rotorblatts bezeichnet. Um einen Einschlagpunkt zu definieren, umfassen derartige Blitzableiter regelmäßig einen Rezeptor, z. B. einen Metallrezeptor, der in der Regel an der äußeren Blattspitze des Rotorblatts angeordnet ist, da die Blattspitze (in Abhängigkeit der Stellung des zumindest einen Rotorblatts der Windenergieanlage) den höchsten Punkt der Windenergieanlage darstellt. Der Blitzableiter kann beispielsweise als ein Einleiter ausgebildet sein. Ferner kann der Blitzableiter mit oder ohne Rückleiter ausgebildet sein.

Der in den Blitzableiter eingeleitete Impuls ist durch eine elektromagnetische Welle charakterisiert bzw. repräsentiert.

Die Impulsantwortinformation wird beispielsweise ermittelt, indem ein Bestimmen (z. B. Messen) eines Antwortsignals erfolgt, dass in Reaktion auf den in den Blitzableiter eingeleiteten Impuls erfasst (z. B. gemessen) werden kann. Die Impulsantwortinformation repräsentiert beispielsweise dann dieses gemessene Signal (Antwortsignal). Dabei wird das Antwortsignal beispielsweise nach dem Einleiten des Impulses in den Blitzableiter erfasst, z. B. für die Dauer einer vordefinierten Zeitspanne, und/oder indem eine Amplitude des gemessenen Antwortsignals erfasst (z. B. gemessen) wird. Das Ermitteln der Impulsantwortinformation kann beispielsweise mittels einer Messeinrichtung erfolgen.

Das Antwortsignal wird beispielsweise ermittelt, indem eine Erfassung (z. B. Messung) einer reflektierten elektromagnetischen Welle oder von mehreren reflektierten elektromagnetischen Wellen erfolgt, die das Resultat des eingeleiteten Impulses bzw. der mehreren eingeleiteten Impulse für den Fall, das entsprechend mehrere Impulse in den Blitzableiter eingeleitete werden sind. Das Antwortsignal entspricht beispielsweise einem Ausgangssignal eines Systems umfassend den Blitzableiter, bei dem am Eingang als der Impuls z. B. ein Dirac-Impuls bzw. ein dem Dirac-Impuls angenäherter Impuls, bei dem mit möglichst hoher Amplitude in möglichst kurzer Zeit diesem System zugeführt wird. Der eingeleitete Impuls ist daher beispielsweise ein Signal (z. B. elektromagnetische Welle) mit (möglichst) hoher Amplitude über eine (möglichst) kurze, d.h. begrenzte Zeitdauer.

Die Auswertungsinformation wird basierend auf der ermittelten Impulsantwortinformation bestimmt, wobei die Impulsantwortinformation zumindest hinsichtlich der repräsentierten Wellenform und der Laufzeit (z. B. Signallauflänge des Antwortsignals) der eingeleiteten und dann reflektierten elektromagnetischen Welle (Impuls) analysiert wird. Nach der erfolgten Analyse repräsentiert die Auswertungsinformation, ob der Blitzableiter funktionsfähig ist oder nicht. Das basierend auf dem eingeleiteten Impuls reflektierte Antwortsignal wird beispielsweise insbesondere durch Störungen verändert, z. B. in seiner Laufzeit verändert (z. B. verlängert). Dies kann beispielsweise insbesondere durch äußere Störgrößen, denen der eingeleitete Impuls im Rahmen der Reflektion bis zum Erfassen des Antwortsignals unterliegen kann, hervorgerufen werden. Dies können beispielsweise Störgrößen wie offene und/oder (nicht) abgeschirmte Leiter, atmosphärische Einkoppelungen, oder dergleichen seien, um nur einige nicht-limitierende Beispiele zu nennen.

Anschließend wird die bestimmte Auswertungsinformation ausgegeben bzw. dessen Ausgabe wird veranlasst bzw. eine entsprechende Ausgabe kann ausgelöst werden. Ein Benutzer kann dann basierend auf der bestimmten Auswertungsinformation eine Aktion durchführen, z. B. für den Fall, dass die Auswertungsinformation einen nicht funktionsfähigen Blitzableiter repräsentiert, kann der Benutzer durch die Ausgabe in Kenntnis darüber gesetzt werden und anschließend beispielsweise eine Reparatur durchführen. Alternativ oder zusätzlich hierzu kann in einer Ausgestaltung des Verfahrens die Auswertungsinformation an eine weitere Entität, z. B. einen Server, ausgegeben werden. Beispielsweise kann die Auswertungsinformation repräsentieren, ob der Blitzableiter funktionsfähig ist oder nicht. Der Server kann diese Auswertungsinformation beispielsweise speichern. Für den Fall, dass seitens des Servers eine Vielzahl solcher Auswertungsinformationen gespeichert sind, kann sich beispielsweise ein Benutzer bzw. der Benutzer einen Überblick darüber verschaffen, welche Blitzableiter, die beispielsweise jeweils von Windenergieanlagen umfasst sind, funktionsfähig sind oder nicht. Ebenso ist es denkbar, dass mit der Ausgabe der Auswertungsinformation automatisch eine Aktion ausgelöst wird, beispielsweise eine Reparatur veranlasst wird.

Das erfindungsgemäße Verfahren kann beispielsweise regelmäßig, z. B. in vordefinierten Zeitabständen durchgeführt werden. Alternativ oder zusätzlich kann das erfindungsgemäße Verfahren nach einem geschehenen Ereignis, z. B. einem Blitzeinschlag in die Windenergieanlage durchgeführt werden. Im Ergebnis kann hierdurch zeitnah bestimmt werden, ob ein Blitzableiter funktionsfähig ist oder nicht. Für den Fall, dass beispielsweise eine Vielzahl solcher Blitzableiter mittels des erfindungsgemäßen Verfahrens überprüft wird, wird unmittelbar nach der Durchführung des Verfahrens ersichtlich, ob der Blitzableiter funktionsfähig ist oder nicht. In Abhängigkeit der Häufigkeit der Durchführung des erfindungsgemäßen Verfahrens kann also sehr schnell erfasst werden, ob ein bzw. mehrere Blitzableiter, die z. B. von einer oder mehreren Windenergieanlagen umfasst sind, funktionsfähig sind oder nicht.

Derart ist es möglich, die Überprüfung des Blitzableiters, der beispielsweise von einer Windenergieanlage umfasst ist, nunmehr zumindest teilweise automatisch durchzuführen. Die Vorrichtung gemäß dem zweiten Aspekt der vorliegenden Erfindung kann hierzu beispielsweise von der Windenergieanlage umfasst sein. Insbesondere weist eine derartige Vorrichtung eine operative Verbindung z. B. über eine Nabe, an der Rotorblätter der Windenergieanlage mit einem Generator der Windenergieanlage verbunden sind, zu den jeweiligen von den Rotorblättern umfassten Blitzableitern auf. Die Vorrichtung kann nun über diese Verbindung einen Impuls in einen der Blitzableiter einleiten und nach dem Verfahren gemäß dem ersten Aspekt der vorliegenden Erfindung die Impulsantwortinformation ermitteln. Ein aufwendiger Personaleinsatz vor Ort zur Überprüfung der von den Rotorblättern der Windenergieanlage umfassten Blitzableiter kann entfallen.

Dies führt zum einen zu einem Vorteil auf Seiten der Kosten der Messung, da der personelle sowie zeitliche Aufwand stark verringert wird. Zum anderen wird auch die Gefahr eines Absturzes oder einer Verletzung des Personals bzw. der Seilschaft verhindert, was aus Gesundheits- und Arbeitsschutz technischen Aspekten einen großen Vorteil bietet.

Gemäß der Erfindung umfasst das Bestimmen der Auswertungsinformation einen Vergleich der von der Impulsantwortinformation repräsentierten Wellenform und/oder Laufzeit mit zumindest einer Referenzinformation.

Die zumindest eine Referenzinformation ist erf indungsgemäß indikativ für eine Impulsantwortinformation eines unbeschädigten Blitzableiters. Entsprechend kann die zumindest eine Referenzinformation beispielsweise vor dem Verfahren gemäß dem ersten Aspekt der Erfindung bestimmt bzw. ermittelt werden. Zur Bestimmung der zumindest einen Referenzinformation wird beispielsweise ein Impuls in den unbeschädigten Blitzableiter eingeleitet, und anschließend die Signalantwort bestimmt (z. B. gemessen). Um sicherzustellen, dass der Blitzableiter unbeschädigt ist, wird erfindungsgemäß eine weitere Messung des Blitzableiters durchgeführt, insbesondere nach Art eines alternativen Messverfahrens, so dass sichergestellt werden kann, dass der Blitzableiter unbeschädigt ist. Alternativ oder zusätzlich kann der Blitzableiter beispielsweise unmittelbar nach dessen Herstellung zum Bestimmen der zumindest einen Referenzinformation verwendet werden, so dass wiederum sichergestellt werden kann, dass zum Bestimmen der zumindest einen Referenzinformation ein unbeschädigter Blitzableiter verwendet wird. Alternativ oder zusätzlich kann z. B. durch eine manuelle Kontrolle sichergestellt werden, ob der Blitzableiter unbeschädigt ist bzw. die zumindest eine Referenzinformation bestimmt bzw. ermittelt wird.

Die zumindest eine Referenzinformation kann beispielsweise eine Identifikationsinformation indikativ für eine Art, Typ und/oder zumindest eine den Blitzableiter eindeutig charakterisierende Eigenschaft (z. B. Länge, Anzahl Einkoppelstellen oder dergleichen, um nur einige nicht-limitierende Beispiele zu nennen) oder eine entsprechende Identifikationsinformation repräsentieren bzw. umfassen. Die zumindest eine Referenzinformation kann beispielsweise optional in Abhängigkeit des eingeleiteten Impulses bestimmt bzw. ermittelt werden.

Beispielsweise kann die zumindest eine Referenzinformation, die mit dem unbeschädigten Blitzableiter assoziiert ist, eine Signalantwort auf einen eingeleiteten Impuls sein, wie z. B. einen Dirac-Impuls, eine vordefinierte Amplitude und/oder abfallende Flanke eines eingeleiteten Impulses, um nur einige nicht-limitierende Beispiele zu nennen. Es versteht sich, dass zur Vergleichbarkeit anschließend der Blitzableiter mit einem identischen Impuls überprüft werden sollte.

Der eingeleitete Impuls kann beispielsweise ein Rechteckimpuls sein. Zusätzlich kann anstelle von einem Impuls eine Folge von Impulsen umfassend mindestens zwei Impulse in den Blitzableiter eingeleitet werden.

Bei bekannten (Kabel-) Parametern des Blitzableiters kann die zumindest eine Referenzinformation z. B. auch direkt eingegeben werden. Dies empfiehlt sich insbesondere für den Fall, dass ein Bestimmen der zumindest einen Referenzinformation ansonsten nicht möglich ist.

Sollte der Blitzableiter defekt sein, d.h. der Leiter ist in irgendeiner Weise beschädigt oder sogar ganz gebrochen, ändert sich die Form der reflektierten elektromagnetischen Welle, die von der Impulsantwortinformation repräsentiert ist.

Gemäß einer beispielhaften Ausführungsform aller Aspekte der Erfindung erfolgt das Bestimmen der Auswertungsinformation auf Basis von einem oder mehreren der folgenden Parameter i) bis ii):
i) Laufzeiten des eingeleiteten Impulses; und
ii) Charakter der reflektierten elektromagnetischen Welle.

Die Laufzeit des eingeleiteten Impulses (Signals), das von der Impulsantwortinformation repräsentiert wird, ist z. B. die zeitliche Differenz zwischen dem Eintritt eines Signals (vorliegend der in den Blitzableiter eingeleitete Impuls) in den Blitzableiter und dem Austritt (Reflexion und/oder Abklingen des eingeleiteten Impulses) nach dessen Reflexion und/oder (vollständigen) Abklingen.

Der Blitzableiter weist beispielsweise ein offenes Kabelende auf. Ein in den Blitzableiter aufweisend das offene Kabelende eingeleiteter Impuls pendelt in diesem Fall zwischen den Enden des Blitzableiters hin und her, wobei sukzessive die Intensität (d.h. Amplitude) des eingeleiteten Impulses abnimmt. Dies wird im Sinne des vorliegenden Gegenstands auch als Abklingen des Impulses bezeichnet.

Der Charakter der reflektierten elektromagnetischen Welle (auch mit Signalcharakter bezeichnet) repräsentiert von der Impulsantwortinformation ist beispielsweise indikativ für ein oder mehrere Reflexionscharakteristika. Beispielsweise kann der Signalcharakter eine Spannungswelle mit exponentiell absteigender Charakteristik bei Blitzableitern bilden, in denen Parallelverluste überwiegen. Beispielsweise kann der Signalcharakter eine Spannungswelle mit exponentiell ansteigender Charakteristik bei Blitzableitern bilden, in denen Serienverluste überwiegen. Entsprechend kann beispielsweise bestimmt werden, ob der Blitzableiter ordnungsgemäß bzw. funktionsfähig ist anhand der auftretenden Verluste. Beispielsweise treten bei Blitzableitern, die ein offenes Ende aufweisen, nur Impulse und deren Reflexionen gleicher Polarität auf, wobei zudem die Amplitude der Reflexionen stetig abnimmt. Dies kann beispielsweise entsprechend der Signalcharakter, den eine von der Impulsantwortinformation repräsentierte Signalantwort auf einen in den Blitzableiter eingeleiteten Impuls aufweisen kann, repräsentieren. Der Signalcharakter kann beispielsweise ferner ein oder mehrere kapazitive, resistive und/oder induktive Charakteristika der Reflexion des in den Blitzableiter eingeleiteten Impulses repräsentieren.

Die Unterschiede beispielsweise in Form und Laufzeit der elektromagnetischen Wellen dienen folglich als Indikator für einen defekten Blitzableiter.

Gemäß einer beispielhaften Ausführungsform aller Aspekte der Erfindung erfolgt ein Bestimmen der zumindest einen Referenzinformation basierend auf einem unbeschädigten Blitzableiter, der z. B. von einem Rotorblatt umfasst ist, durch ein Bestimmen einer entsprechenden Impulsantwortinformation, die den unbeschädigten Blitzableiter charakterisiert.

Alternativ oder zusätzlich können bekannte Parameter, die beispielsweise vorliegen, wenn ein gleicher Blitzableiter bereits zuvor vermessen wurde, können diese direkt eingegeben werden, so dass die zumindest eine Referenzinformation bestimmt werden kann. Dies kann beispielsweise auch dann durchgeführt werden, falls eine (sonstige) Parametrierung nicht möglich ist.

Gemäß einer beispielhaften Ausführungsform aller Aspekte der Erfindung ist die Impulsantwortinformation als Funktion im Zeitbereich charakterisiert.

Die Impulsantwortinformation als derartige Funktion umfasst beispielsweise mehrere Werte, z. B. Amplituden, die über einen Zeitbereich, z. B. für eine Dauer von null bis fünf Sekunden, abgebildet sind. Die mehreren Werte werden beispielsweise diskret oder stetig erfasst.

Gemäß einer beispielhaften Ausführungsform aller Aspekte der Erfindung weist der Blitzableiter zumindest einen Einkoppelpunkt (auch mit Einkoppelstelle bezeichnet) an einem Ende des Blitzableiters auf, wobei über den zumindest einen Einkoppelpunkt der (z. B. von einem Impuls- oder Sprungfunktion-Generator generierte) Impuls in den Blitzableiter eingeleitet wird.

Der Blitzableiter kann beispielsweise zumindest einen Einkoppelpunkt zur Einleitung des Impulses aufweisen. Dieser Einkoppelpunkt kann beispielsweise ferner zum Ermitteln der Impulsantwortinformation verwendet werden, indem beispielsweise an diesem Einkoppelpunkt eine entsprechende Messeinrichtung operativ angebunden bzw. operativ mit diesem verbunden ist. Der Blitzableiter kann ferner einen definierten Einschlagpunkt für einen Blitz aufweisen, der im Sinne des vorliegenden Gegenstands von dem zumindest einen Einkoppelpunkt zum Einleiten des Impulses zu unterscheiden ist.

Gemäß einer beispielhaften Ausführungsform aller Aspekte der Erfindung wird eine Gesamtimpedanzinformation indikativ für eine Gesamtimpedanz des Blitzableiters ermittelt, wobei das Bestimmen der Auswertungsinformation ferner zumindest teilweise basierend auf der Gesamtimpedanzinformation erfolgt.

Die Gesamtimpedanz des Blitzableiters kann beispielsweise im Nachgang bestimmt werden, z. B. basierend auf der Laufzeit des Impulses (der elektromagnetischen Welle) und deren Form.

Die Gesamtimpedanz des Blitzableiters ergibt sich unter anderem aus Gegebenheiten des von einem Rotorblatt einer Windenergieanlage umfassten Blitzableiters. Dies sind beispielsweise die Blattlänge des Rotorblatts, die Länge des Blitzableiters (z. B. ausgebildet als Einleiter), die Anzahl von definierten Einschlagpunkte an denen sich ein Blitz mit dem Blitzableiter elektrisch verbindet, um nur einige nicht-limitierende Beispiele zu nennen. Ferner können dies die Länge und die Art des Blitzableiters sein, der spezifische Widerstand des Blitzableiters, die Anzahl von Rezeptoren des Blitzableiters, und/oder die Verbindung der Rezeptoren, wobei sämtliche vorstehend angeführten Gegebenheiten durch das von der Windenergieanlage umfasste Rotorblatt, das wiederrum den Blitzableiter umfasst, fest definiert sein können.

Gemäß einer beispielhaften Ausführungsform aller Aspekte der Erfindung wird die Gesamtimpedanzinformation basierend auf der ermittelten Laufzeit des Impulses, dessen Form, jeweils repräsentiert von der ermittelten Impulsantwortinformation, und dem spezifischen Widerstand des Blitzableiters bestimmt.

Durch die Signallauflänge repräsentiert von der Impulsantwortinformation (z. B. die gemessene Laufzeit der elektromagnetischen Welle bzw. deren Reflexion), deren repräsentierte Form und den spezifischen Widerstand (der z. B. abhängig von Temperatur und Material des Blitzableiters ist) kann entsprechend die Gesamtimpedanz des Blitzableiters bestimmt werden.

Gemäß einer beispielhaften Ausführungsform aller Aspekte der Erfindung wird die Impulsantwortinformation mittels zumindest eines Abgriffs am Anfang oder am Ende des Blitzableiters ermittelt.

Der Abgriff kann beispielsweise identisch mit der Einkoppelstelle zur Einleitung des Impulses in den Blitzableiter sein bzw. an der identischen Stelle operativ verbunden sein. Der zumindest eine Abgriff kann insbesondere an demjenigen Ende des Blitzableiters angeordnet sein, das einer Nabe einer Windenergieanlage, an der z. B. ein Rotorblatt, dass den Blitzableiter umfasst, angeordnet, d. h. drehbar gelagert ist.

Gemäß einer beispielhaften Ausführungsform aller Aspekte der Erfindung wird das Verfahren mittels einer Zeitbereichsreflektometrie-Vorrichtung durchgeführt wird, wobei die Zeitbereichsreflektometrie-Vorrichtung zumindest einen Impulsgenerator zum Einleiten des Impulses und eine Messeinrichtung zum Ermitteln der Impulsantwort umfasst.

Die Messeinrichtung ist beispielsweise ein Oszilloskop bzw. umfasst eine oder mehrere Funktionalitäten eines Oszilloskops. Die mittels der Messeinrichtung ermittelte (z. B. gemessene) Reflexion bzw. mehrere Reflexionen von einem oder mehreren eingeleiteten Impulse (repräsentiert von der Impulsantwortinformation) können beispielsweise analysiert werden. Z. B. können die eine oder mehreren ermittelten Reflexionen mit dem in den Blitzableiter eingeleiteten Impuls, bzw. für den Fall, dass eine Folge umfassend mindestens zwei Impulse in den Blitzableiter eingeleitet wird, mit den jeweiligen von der Folge von Impulsen verglichen werden. Hierbei können beispielsweise die Reflexionen auf das Vorhandensein von einem oder mehreren Signalcharakteristika analysiert werden, bzw. diese können zumindest teilweise basierend auf einem Unterschied zwischen dem eingeleiteten Impuls und dessen Reflexion bzw. zwischen den eingeleiteten Impulsen und deren Reflexionen bestimmt werden.

Mittels der Zeitbereichsreflektometrie-Vorrichtung kann z. B. eine Ermittlung und Analyse von Lauflängen und Reflexionscharakteristika von elektromagnetischen Wellen und Signalen erfolgen. Mit einem Impuls- oder Sprungfunktionsgenerator wird z. B. eine elektromagnetische Welle am Leitungsanfang des Blitzschutzsystems in den Blitzableiter gesendet. Diese Welle wird am Ende des Blitzschutzsystems reflektiert und zu ihrem Ursprung zurück gesendet. Die Form der reflektierten Welle als auch ihre Laufzeit wird beispielsweise aufgezeichnet und ausgewertet. Sollte der Blitzableiter defekt sein, d.h. der Leiter des Blitzschutzsystems in irgendeiner Weise beschädigt oder ganz gebrochen sein, ändert sich dadurch die Form der reflektierten Welle.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1: eine schematische Darstellung einer beispielhaften Ausführungsform eines Systems gemäß der vorliegenden Erfindung;
- Fig. 2: ein Flussdiagramm einer beispielhaften Ausführungsform eines Verfahrens nach dem ersten Aspekt gemäß der vorliegenden Erfindung; und
- Fig. 3: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

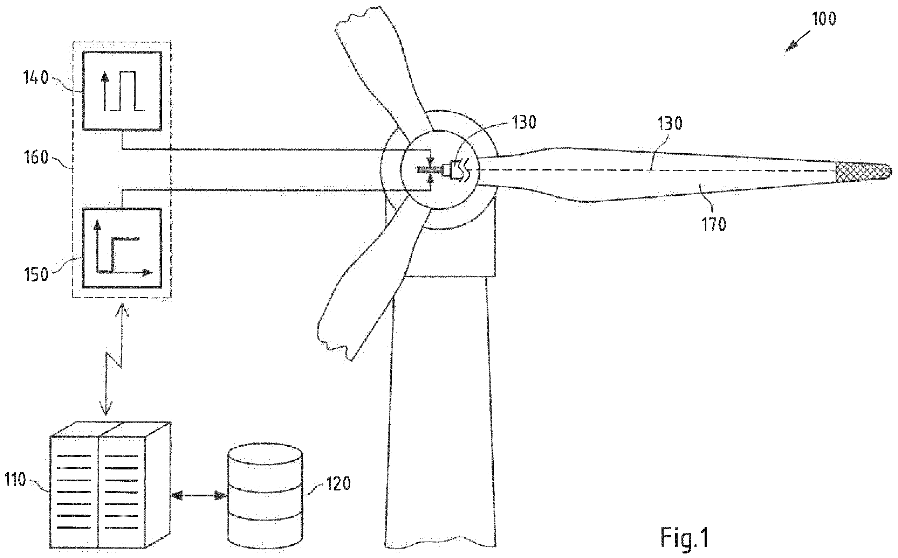

Fig. 1 ist eine schematische Darstellung einer beispielhaften Ausführungsform eines Systems 100 gemäß der vorliegenden Erfindung. Das System 100 umfasst einen Server 110, eine optionale Datenbank 120, einen Blitzableiter 130, der vorliegend von einem schematisch dargestellten Rotorblatt 170 einer Windenergieanlage umfasst ist, sowie eine Vorrichtung 160 zur Überprüfung des Blitzableiters 130, wobei mit dieser Vorrichtung 160 überprüfbar ist, ob der Blitzableiter 130 funktionsfähig ist oder nicht.

Die Vorrichtung 160 kann eine Zeitbereichsreflektometrie-Vorrichtung sein, und kann beispielsweise einen Impulsgenerator oder Sprungfunktionsgenerator 140, sowie eine Messeinrichtung 150 (z. B. ein als Oszilloskop ausgebildetes Messgerät) umfassen. Die Vorrichtung 160 ist insbesondere von einer Windenergieanlage (in Fig. 1 nicht dargestellt), die auch das Rotorblatt 170 umfassend den Blitzableiter 130 aufweist, umfasst. Vorteilhafterweise ist die Vorrichtung 160, bzw. die von der Vorrichtung 160 umfassten Entitäten 140 und 150 operativ (z. B. elektrisch) mit einer Einkoppelstelle des Blitzableiters 130 verbunden. Der Blitzableiter 130 weist eine derartige Einkoppelstelle insbesondere an einem Ende auf, insbesondere an dem einer Nabe, an der beispielsweise auch das Rotorblatt 170 an eine Windenergieanlage angeschlossen ist, zugewandten Ende des Blitzableiters 170, auf.

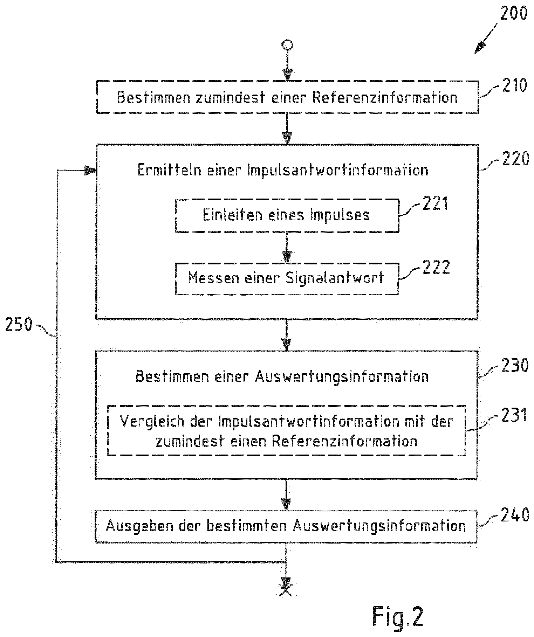

Die Ausgabe der bestimmten Auswertungsinformation (vgl. Schritt 240 der Fig. 2) erfolgt beispielsweise an den Server 110, indem die Auswertungsinformation beispielsweise an den Server 110 übermittelt wird, beispielsweise über ein Kommunikationsnetz (z. B. das Internet).

Der Server 110 ist beispielsweise ferner mit einer optionalen Datenbank 120 operativ verbunden, bzw. der Server 110 umfasst beispielsweise die optionale Datenbank 120. Die Datenbank 120 weist beispielsweise einen Speicher auf, in dem beispielsweise eine oder mehrere Referenzinformationen (vgl. optionalen Schritt 210 der Fig. 2), oder zumindest temporär eine oder mehrere Impulsantwortinformationen und/oder Auswertungsinformationen gespeichert werden können.

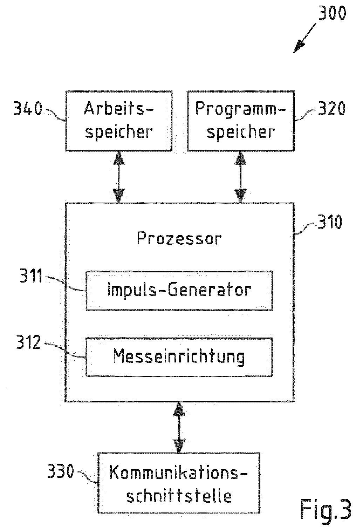

Fig. 3 zeigt eine schematische Darstellung einer beispielhaften Ausführungsform einer Vorrichtung 300, die im Kontext der vorliegenden Erfindung eingesetzt werden kann.

Die Vorrichtung 300 kann beispielsweise die Vorrichtung 160 nach Fig. 1 repräsentieren (und dann beispielsweise das Verfahren des Flussdiagramms 200 nach Fig. 2 ausführen). Die Vorrichtung 300 kann beispielsweise auch den Server 110 nach Fig. 1 repräsentieren (und dann beispielsweise das zusammen mit der Vorrichtung 160 nach Fig. 1 das Verfahren des Flussdiagramms 200 nach Fig. 2 ausführen).

Vorrichtung 300 umfasst einen Prozessor 310 mit zugeordnetem Arbeitsspeicher 340 und Programmspeicher 320. Der Prozessor 310 führt beispielsweise Programmanweisungen aus, die im Programmspeicher 320 gespeichert sind. Die Programmanweisungen führen das Verfahren gemäß dem ersten Aspekt der Erfindung aus und/oder steuern dieses. Damit enthält der Programmspeicher 320 ein Computerprogramm nach einem beispielhaften Aspekt der Erfindung und stellt ein Computerprogrammprodukt zu dessen Speicherung dar. Vorrichtung 300 stellt ein Beispiel einer Vorrichtung gemäß dem zweiten Aspekt der Erfindung dar.

Der Programmspeicher 320 kann beispielsweise ein persistenter Speicher, wie beispielsweise ein Read-Only Memory (ROM)-Speicher sein. Der Programmspeicher 320 kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z. B. eine CD oder DVD). In dem Programmspeicher 320, oder in einem separaten Speicher, können auch weitere Informationen abgespeichert sein.

Der Arbeitsspeicher 340 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor 310 ist ferner operativ mit einer Kommunikationsschnittstelle 330 verbunden, mit der beispielsweise ein Informationsaustausch mit anderen Vorrichtungen möglich ist (siehe z. B. die Pfeile zwischen den von dem System 110 gemäß Fig. 1 umfassten Entitäten).

Die Vorrichtung 300 kann auch weitere Komponenten enthalten oder umfassen. Falls Vorrichtung 300 eine Erfassungseinheit (z. B. Messeinrichtung 150 nach Fig. 1), z. B. zum Bestimmen einer Impulsantwortinformation (vgl. Schritt 201 nach Fig. 2) repräsentiert, ist insbesondere ein Erfassungsmittel zur Erfassung der Impulsantwort vorhanden, das beispielsweise zur Signalerfassung (z. B. Messen) in Form einer Messeinrichtung 312 (z. B. ein Messgerät) als strukturelle und/oder funktionale Einheit eingerichtet ist und mit dem Prozessor 310 operativ verbunden bzw. von diesem umfasst ist. Die Vorrichtung 300, insbesondere der Prozessor 310, kann ferner einen Impuls-Generator 311 (oder alternativ einen Sprungfunktion-Generator) als strukturelle und/oder funktionale Einheit umfassen. Der Impuls-Generator 311 kann beispielsweise konfiguriert sein, einen Impuls in einen Blitzableiter (z. B. Blitzableiter 130 nach Fig. 1) einzuleiten (vgl. auch Schritt 221 der Fig. 2).

Falls Vorrichtung 300 eine Erfassungseinheit repräsentiert, können mit dem Prozessor 310 operativ verbundene Mittel zum Bestimmen einer Auswertungsinformation, vorhanden sein. Alternativ kann das Bestimmen der Auswertungsinformation unmittelbar von dem Prozessor 310 durchgeführt werden.

Fig. 2 stellt ein Flussdiagramm 200 einer beispielhaften Ausführungsform eines Verfahrens dar, das von einer Vorrichtung 160 im Kontext der vorliegenden Erfindung zur Überprüfung eines Blitzableiters, z. B. Blitzableiter 170 gemäß Fig. 1ausgeführt werden kann.

In einem optionalen ersten Schritt 210 erfolgt ein Bestimmen von zumindest einer Referenzinformation. Das Bestimmen der zumindest einen Referenzinformation erfolgt beispielsweise seitens eines Impuls-Generators (oder alternativ ein Sprungfunktion-Generator), z. B. Impuls-Generator 140 nach Fig. 1. Die Vorrichtung 160 bzw. der Impuls-Generator 140 leiten einen generierten Impuls in den Blitzableiter (z. B. Blitzableiter 130 nach Fig. 1) ein, z. B. über eine Einkoppelstelle, mit der die Vorrichtung 160 bzw. der Impuls-Generator 140 operativ verbunden ist.

In einem zweiten Schritt 220 erfolgt ein Ermitteln einer Impulsantwortinformation. Der Schritt 220 umfasst ferner den Schritt 221, wonach ein Einleiten eines Impulses in den Blitzableiter erfolgt. Ferner umfasst der Schritt 220 vorliegend den Schritt 222, der nachfolgend zu dem Schritt 221 ausgeführt wird, und wonach ein Messen einer Signalantwort erfolgt. Die in dem Schritt 222 gemessene Signalantwort wird beispielsweise von der Impulsantwortinformation anschließend repräsentiert. Das Ermitteln der Impulsantwortinformation erfolgt beispielsweise seitens einer Messeinrichtung (z. B. Messeinrichtung 150 nach Fig. 1). Die Messeinrichtung 150 ist beispielsweise von der Vorrichtung 160 nach Fig. 1 umfasst. Die Vorrichtung 160 bzw. die Messeinrichtung 150 ist beispielsweise mit einer Einkoppelstelle, die von dem Blitzableiter umfasst, operativ verbunden ist. Für den Fall, dass die Messeinrichtung 150 von der Vorrichtung 160 umfasst ist, kann mittels der Messeinrichtung 150 ein Ermitteln (z. B. Messen) von einer oder mehreren Reflexionen, die als Signalantwort basierend auf einem in den Blitzableiter 130 eingeleiteten Impuls bzw. mehrere Impulse durchgeführt werden. Der in den Blitzableiter 130 eingeleitete Impuls bzw. die mehreren in den Blitzableiter 130 eingeleiteten Impulse können beispielsweise von einem Impuls-Generator (z. B. Impuls-Generator 140 nach Fig. 1] generiert und entsprechend in den Blitzableiter eingeleitet werden, für den Fall, dass ein entsprechender Impuls-Generator von der Vorrichtung 160 umfasst ist.

In einem dritten Schritt 230 erfolgt ein Bestimmen einer Auswertungsinformation. Der Schritt 230 umfasst einen optionalen Vergleich der Impulsantwortinformation (vgl. Schritt 220) mit der zumindest einen Referenzinformation (vgl. Schritt 210) für den Fall, dass der optionale Schritt 210 von dem Flussdiagramm ausgeführt wurde. Das Bestimmen der Auswertungsinformation kann alternativ auch von einem von der Vorrichtung 160 entfernten, beispielsweise über ein Kommunikationsnetz (z. B. Internet) verbundenen Server (z. B. Server 110 nach Fig. 1) erfolgen. Hierzu muss zuvor z. B. von der Vorrichtung 160 an den Server 110 die Impulsantwortinformation übermittelt werden.

In einem vierten Schritt 240 erfolgt ein Ausgeben der bestimmten Auswertungsinformation. Die Auswertungsinformation wird beispielsweise von der Vorrichtung 160 an einen Server (z. B. Server 110 nach Fig. 1) übermittelt. Anschließend kann die ausgegebene Auswertungsinformation weiter verarbeitet werden, z. B. in einer Datenbank (z. B. Datenbank 120 nach Fig. 1) gespeichert werden und/oder ausgegeben werden, z. B. an einen Benutzer. Die Ausgabe kann beispielsweise derart erfolgen, dass die Auswertungsinformation einem Benutzer wiedergegeben wird, z. B. optisch und/oder akustisch mittels einer entsprechend zur optischen und/oder akustischen Wiedergabe von Informationen ausgebildeten Einrichtung (z. B. Display und/oder Lautsprecher).

Für den Fall, dass die Auswertungsinformation seitens eines Servers (z. B. Server 110 nach Fig. 1) bestimmt wurde, erfolgt die Ausgabe beispielsweise an einen weiteren Server, z. B. der von einer Netzleitstelle eines Stromnetzes, in das die den Blitzableiter z. B. umfassende Windenergieanlage einspeist. Alternativ oder zusätzlich kann die Ausgabe analog zu der oben beschriebenen Ausgabe an einen Benutzer erfolgen.

Die Schritte 220, 230 und 240 können beispielsweise in regelmäßigen zeitlichen Abständen, z. B. vordefinierten zeitlichen Abständen, und/oder in Abhängigkeit eines Ereignisses, z. B. ein aufgetretener Blitzeinschlag, wiederholt werden. Dies ist in dem Flussdiagramm 200 schematisch durch den Pfeil 250, der auf den Schritt 220 zurückführt, dargestellt.

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten" oder dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhand dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zur Überprüfung eines Blitzableiters (130) von einem von einem Rotorblatt (170) einer Windenergieanlage umfassten Blitzschutzsystem, wobei die Windenergieanlage eine Vorrichtung (160) zur Überprüfung des Blitzableiters (130) sowie das Rotorblatt (170) umfassend den Blitzableiter (130) umfasst, wobei die Vorrichtung (160) zur Überprüfung des zumindest einen Blitzableiters (130) zur Ausführung und/oder Durchführung des Verfahrens ausgebildet und/oder eingerichtet ist und die Vorrichtung (160) eine Zeitbereichsreflektometrie-Vorrichtung ist und zumindest einen Impulsgenerator (140) zum Einleiten eines Impulses und eine Messeinrichtung (150) zum Ermitteln (220) der Impulsantwort umfasst, das Verfahren umfassend:
- Ermitteln (220) einer Impulsantwortinformation, seitens der Messeinrichtung (150), indikativ für eine Impulsantwort, wobei die Impulsantwortinformation basierend auf einem in den Blitzableiter (130) eingeleiteten Impuls, der durch eine elektromagnetische Welle charakterisiert ist, bestimmt wird, wobei die Impulsantwortinformation zumindest eine Wellenform und eine Laufzeit, die nach dem Einleiten des Impulses auf Basis von dessen Reflexion ermittelt wird, repräsentiert;
- Bestimmen (230) einer Auswertungsinformation, seitens der Vorrichtung (160), basierend auf der ermittelten Impulsantwortinformation, wobei die Impulsantwortinformation zumindest hinsichtlich der repräsentierten Wellenform und der Laufzeit der eingeleiteten und reflektierten elektromagnetischen Welle analysiert wird, wobei die Auswertungsinformation indikativ dafür ist, ob der Blitzableiter (130) funktionsfähig ist oder nicht; und
- Ausgeben oder Veranlassen der Ausgabe (240) der bestimmten Auswertungsinformation seitens der Vorrichtung (160);
wobei das Bestimmen (230) der Auswertungsinformation einen Vergleich der von der Impulsantwortinformation repräsentierten Wellenform und/oder Laufzeit mit zumindest einer Referenzinformation indikativ für eine Impulsantwortinformation eines unbeschädigten Blitzableiters umfasst, und eine weitere Messung des Blitzableiters (130), um sicherzustellen, dass der Blitzableiter (130) unbeschädigt ist.

2. Verfahren nach Anspruch 1, wobei das Bestimmen (230) der Auswertungsinformation auf Basis von einem oder mehreren der folgenden Parameter i) bis ii) erfolgt:
i) Laufzeiten des eingeleiteten Impulses; und
ii) Charakter der reflektierten elektromagnetischen Welle.

3. Verfahren nach Anspruch 1 oder Anspruch 2, wobei die zumindest eine Referenzinformation basierend auf einem unbeschädigten Blitzableiter (130), der von einem Rotorblatt (170) umfasst ist, durch ein Bestimmen einer entsprechenden Impulsantwortinformation, die den unbeschädigten Blitzableiter (130) charakterisiert, erfolgt.

4. Verfahren nach einem der vorhergehenden Ansprüche, wobei die Impulsantwortinformation als Funktion im Zeitbereich charakterisiert ist.

5. Verfahren nach einem der vorhergehenden Ansprüche, wobei der Blitzableiter (130) zumindest einen Einkoppelpunkt an einem Ende des Blitzableiters (130) aufweist, wobei über den zumindest einen Einkoppelpunkt der Impuls in den Blitzableiter (130) eingeleitet wird.

6. Verfahren nach einem der vorhergehenden Ansprüche, wobei eine Gesamtimpedanzinformation indikativ für eine Gesamtimpedanz des Blitzableiters (130) ermittelt wird, wobei das Bestimmen (230) der Auswertungsinformation ferner zumindest teilweise basierend auf der Gesamtimpedanzinformation erfolgt.

7. Verfahren nach Anspruch 6, wobei die Gesamtimpedanzinformation basierend auf der ermittelten Laufzeit des Impulses, dessen Form, jeweils repräsentiert von der ermittelten Impulsantwortinformation, und dem spezifischen Widerstand des Blitzableiters (130) bestimmt wird.

8. Verfahren nach einem der vorhergehenden Ansprüche, wobei die Impulsantwortinformation mittels zumindest eines Abgriffs am Anfang oder am Ende des Blitzableiters (130) ermittelt wird.

9. Vorrichtung (160, 300) eingerichtet zur Ausführung und/oder Steuerung des Verfahrens nach einem der Ansprüche 1 bis 8 oder umfassend jeweilige Mittel zur Ausführung und/oder Steuerung der Schritte des Verfahrens nach einem der Ansprüche 1 bis 8, wobei die Vorrichtung von einer Windenergieanlage umfasst ist.

10. Rotorblatt (170) für eine Windenergieanlage, umfassend zumindest einen Blitzableiter (130) und Mittel (160) zur Überprüfung des zumindest einen Blitzableiters (130), wobei die Mittel (160) zur Ausführung und/oder Durchführung eines Verfahrens nach einem der Ansprüche 1 bis 8 ausgebildet und/oder eingerichtet sind.

11. System (100), umfassend eine oder mehrere Vorrichtungen (160, 300) nach dem Anspruch 9, die eingerichtet sind zur Ausführung und/oder Steuerung des Verfahrens nach einem der Ansprüche 1 bis 8 oder Mittel (160) zur Ausführung und/oder Steuerung der Schritte des Verfahrens nach einem der Ansprüche 1 bis 8 aufweisen.

## Claims

1. Method for checking a lightning conductor (130) of a lightning protection system comprised by a rotor blade (170) of a wind turbine, wherein the wind turbine comprises a device (160) for checking the lightning conductor (130) and the rotor blade (170) comprising the lightning conductor (130), wherein the device (160) for checking the at least one lightning conductor (130) is designed and/or configured to carry out and/or to execute the method, and wherein the device (160) is a time domain reflectometry device and comprises at least one pulse generator (140) for introducing a pulse and a measuring device (150) for determining (220) the pulse response, the method comprising:
- determining (220), by the measuring device (150), a pulse response information indicative of a pulse response, wherein the pulse response information is determined based on an pulse introduced into the lightning conductor (130) **characterized by** an electromagnetic wave, wherein the pulse response information represents at least a waveform and a propagation time determined on the basis of the reflection of the pulse after it has been introduced;
- determining (230), by the device (160), an evaluation information based on the determined pulse response information, wherein the pulse response information is analyzed at least with regard to the represented waveform and the runtime of the introduced and reflected electromagnetic wave, wherein the evaluation information is indicative of whether the lightning conductor (130) is functional or not; and
- outputting or causing an output (240), by the device (160), of the determined evaluation information;
wherein determining (230) the evaluation information comprises a comparison of the waveform and/or propagation time represented by the pulse response information with at least one reference information indicative of a pulse response information of an undamaged lightning conductor, and
a further measuring of the lightning conductor (130) to ensure that the lightning conductor (130) is undamaged.

2. Method according to claim 1, wherein the determining (230) of the evaluation information is based on one or more of the following parameters i) to ii):
i) durations of the introduced pulse; and
ii) character of the reflected electromagnetic wave.

3. Method according to claim 1 or claim 2, wherein the at least one reference information is obtained based on an undamaged lightning conductor (130) which is comprised by a rotor blade (170), by determining a corresponding pulse response information characterizing the undamaged lightning conductor (130).

4. Method according to one of the preceding claims, wherein the pulse response information is characterized as a function in the time domain.

5. Method according to one of the preceding claims, wherein the lightning conductor (130) has at least one coupling point at one end of the lightning conductor (130), wherein the pulse is introduced into the lightning conductor (130) via the at least one coupling point.

6. Method according to one of the preceding claims, wherein a total impedance information indicative of a total impedance of the lightning conductor (130) is determined, wherein the determination (230) of the evaluation information is further carried out at least partially based on the total impedance information.

7. Method according to claim 6, wherein the total impedance information is determined based on the determined propagation time of the pulse, the shape of which is represented by the determined pulse response information, and the specific resistance of the lightning rod (130).

8. Method according to one of the preceding claims, wherein the pulse response information is determined by means of at least one tap at the beginning or at the end of the lightning conductor (130).

9. Device (160, 300) configured to execute and/or control the method according to one of claims 1 to 8 or comprising respective means for executing and/or controlling the steps of the method according to one of claims 1 to 8, wherein the device is comprised by a wind turbine.

10. Rotor blade (170) for a wind turbine comprising at least one lightning conductor (130) and means (160) for checking the at least one lightning conductor (130), wherein the means (160) are designed and/or configured to execute and/or carry out a method according to one of claims 1 to 8.

11. System (100) comprising one or more devices (160, 300) according to claim 9, which are configured to carry out and/or control the method according to any one of claims 1 to 8 or comprise means (160) for carrying out and/or controlling the steps of the method according to any one of claims 1 to 8.

## Revendications

1. Méthode de contrôle d'un paratonnerre (130) d'un système de protection contre la foudre compris par une pale de rotor (170) d'une installation d'énergie éolienne, où l'installation d'énergie éolienne comprend un dispositif (160) de contrôle du paratonnerre (130) ainsi que la pale de rotor (170) comprenant le paratonnerre (130), où le dispositif (160) de contrôle de l'au moins un paratonnerre (130) est formé et/ou configuré pour exécuter et/ou mettre en oeuvre la méthode et le dispositif (160) est un dispositif de réflectométrie dans le domaine temporel et comprend au moins un générateur d'impulsions (140) pour induire une impulsion et un dispositif de mesure (150) pour déterminer (220) la réponse impulsionnelle, la méthode comprenant :
- déterminer (220) une information de réponse impulsionnelle, par le dispositif de mesure (150), indicative d'une réponse impulsionnelle, où l'information de réponse impulsionnelle est déterminée sur la base d'une impulsion introduite dans le paratonnerre (130) qui est **caractérisée par** une onde électromagnétique, où l'information de réponse impulsionnelle représente au moins une forme d'onde et un temps de propagation déterminés après l'introduction de l'impulsion sur la base de sa réflexion ;
- déterminer (230) des informations d'évaluation, par le dispositif (160), basé sur l'information de réponse impulsionnelle déterminées, où l'information de réponse impulsionnelle est analysée au moins en ce qui concerne la forme d'onde représentée et le temps de propagation de l'onde électromagnétique introduite et réfléchie, où l'information d'évaluation est indicative pour le paratonnerre (130) étant opérationnel ou non ; et
- émettre ou faire émettre (240) par le dispositif (160) l'information d'évaluation déterminées ;
où la détermination (230) de l'information d'évaluation comprend une comparaison de la forme d'onde et/ou du temps de propagation représentés par l'information de réponse impulsionnelle avec au moins une information de référence indicative d'une information de réponse impulsionnelle d'un paratonnerre intact, et
une autre mesure du paratonnerre (130) pour assurer que le paratonnerre (130) est intact.

2. Méthode selon la revendication 1, où la détermination (230) des informations d'évaluation est effectuée sur la base d'un ou plusieurs des paramètres i) à ii) suivants :
i) des temps de propagation de l'impulsion introduite ; et
ii) un caractère de l'onde électromagnétique réfléchie.

3. Méthode selon la revendication 1 ou la revendication 2, où la au moins une information de référence basée sur un paratonnerre intact (130) compris dans une pale de rotor (170) est obtenue en déterminant une information de réponse impulsionnelle correspondante caractérisant le paratonnerre intact (130).

4. Méthode selon l'une des revendications précédentes, où l'information de réponse impulsionnelle est caractérisée comme une fonction dans le domaine temporel.

5. Méthode selon l'une des revendications précédentes, où le paratonnerre (130) a au moins un point d'injection à une extrémité du paratonnerre (130), où l'impulsion est introduite dans le paratonnerre (130) par l'au moins un point d'injection.

6. Méthode selon l'une des revendications précédentes, où une information d'impédance totale est déterminée d'être indicatif pour une impédance totale du paratonnerre (130), où la détermination (230) de l'information d'évaluation est en outre effectuée au moins en partie sur la base de l'information d'impédance totale.

7. Méthode selon la revendication 6, où l'information d'impédance totale est déterminée sur la base du temps de propagation de l'impulsion déterminé, de sa forme, représentée respectivement par l'information de réponse impulsionnelle déterminée, et de la résistivité du paratonnerre (130).

8. Méthode selon l'une des revendications précédentes, où l'information de réponse impulsionnelle est déterminée au moyen d'au moins une prise au début ou à la fin du paratonnerre (130).

9. Dispositif (160, 300) configuré pour mettre en oeuvre et/ou contrôler la méthode selon l'une des revendications 1 à 8 ou comprenant des moyens respectifs pour mettre en oeuvre et/ou contrôler les étapes de la méthode selon l'une des revendications 1 à 8, où le dispositif est compris par une éolienne.

10. Pale de rotor (170) pour une éolienne, comprenant au moins un paratonnerre (130) et des moyens (160) pour examiner le au moins un paratonnerre (130), où les moyens (160) sont formés et/ou configurés pour exécuter et/ou mettre en oeuvre une méthode selon l'une des revendications 1 à 8.

11. Système (100) comprenant un ou plusieurs dispositifs (160, 300) selon la revendication 9, qui sont configurés pour mettre en oeuvre et/ou contrôler le procédé selon l'une des revendications 1 à 8 ou comportant des moyens (160) pour mettre en oeuvre et/ou contrôler les étapes de la méthode selon l'une des revendications 1 à 8.
